(19) Europäisches Patentamt
European Patent Office
Office européen des brevets

(11) EP 1 606 368 B1

(12) **EUROPÄISCHE PATENTSCHRIFT**

(45) Veröffentlichungstag und Bekanntmachung des Hinweises auf die Patenterteilung:
**23.07.2008 Patentblatt 2008/30**

(21) Anmeldenummer: **04712016.7**

(22) Anmeldetag: **18.02.2004**

(51) Int Cl.:
***C09J 201/00*** *(2006.01)* ***H05B 6/80*** *(2006.01)*
***H05B 6/10*** *(2006.01)* ***H05B 6/02*** *(2006.01)*
***H05B 3/84*** *(2006.01)*

(86) Internationale Anmeldenummer:
**PCT/EP2004/001537**

(87) Internationale Veröffentlichungsnummer:
**WO 2004/081136 (23.09.2004 Gazette 2004/39)**

(54) **INTRINSISCH ERWÄRMBARE HAFTKLEBRIGE FLÄCHENGEBILDE**

INTRINSICALLY HEATABLE PRESSURE-SENSITIVE ADHESIVE PLANAR STRUCTURES

MATERIAUX PLATS ADHESIFS POUVANT ETRE CHAUFFES INTRINSEQUEMENT

(84) Benannte Vertragsstaaten:
**DE ES FR GB IT**

(30) Priorität: **10.03.2003 DE 10310722**

(43) Veröffentlichungstag der Anmeldung:
**21.12.2005 Patentblatt 2005/51**

(73) Patentinhaber: **tesa AG**
**20253 Hamburg (DE)**

(72) Erfinder:
- **KEITE-TELGENBÜSCHER, Klaus**
  **22529 Hamburg (DE)**
- **ZÖLLNER, Stephan**
  **22043 Hamburg (DE)**
- **KUPSKY, Marco**
  **25495 Kummerfeld (DE)**
- **PATINO, German**
  **21029 Hamburg (DE)**
- **GÖRBIG, Olaf**
  **22457 Hamburg (DE)**

(74) Vertreter: **Stubbe, Andreas**
**tesa AG,**
**Kst. 9500 - Bf. 645,**
**Quickbornstrasse 24**
**20253 Hamburg (DE)**

(56) Entgegenhaltungen:
**EP-A- 0 942 059** **EP-A- 0 942 060**
**WO-A-02/13580** **DE-A- 19 954 960**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 606 368 B1

## Beschreibung

Die Erfindung betrifft haftklebrige Flächengebilde sowie deren. Verwendung.

In derAutomobiiindustrie werden vermehrt elektrisch heizbare Außenspiegel eingesetzt. Auch sind Sitzheizungen immer mehr verbreitet. Um bei derartigen Anwendungen die gewünschte Beheizung zu erreichen, werden im einfachsten Fall Widerstandsdrähte planar verlegt. Die Heizleistung ist hierbei konstant und wird über einen externen Mechanismus gesteuert. In den letzten Jahren hat sich die Verwendung so genannter PTC-Elemente (PTC für "positive temperature coefficient") durchgesetzt. So werden etwa für Automobilaußenspiegel beispielsweise mit Aluminium kontaktiertierte PTC-Elemente verklebt. Durch Anlegen einer bestimmten Stromstärke heizt sich das PTC-Element auf und die Wärme wird über ein doppelseitiges Haftklebeband auf die Glasoberfläche des Spiegels übertragen. Durch den PTC-Effekt wird die erreichte Temperatur begrenzt, da mit zunehmender Temperatur der Widerstand des Heizelements steigt und somit der Stromfluss verringert wird. Auf diese Weise lassen sich Temperaturen von 45 bis 80°C auf der Oberfläche erzielen. Als PTC-Materialien werden in der Regel rußgefüllte, oft teilkristalline Thermoplaste, z.B. Polyvinylidenfluorid, Hexafluorpropylen oder Tetrafluorethylen, verwendet. Der Stand der Technik ist in DE 29 48 350 A1, EP 0 307 205 A1, EP 0 512 703 A1 sowie EP 0 852 801 A1 detailliert beschrieben. In der Verwendung als Spiegelheizung werden diese PTC-Materialien in Form einer Tinte auf ein Netzwerk von Leiterbahnen, die der Kontaktierung dienen, aufgedruckt. Das in der Tinte enthaltene Lösungmittel wird abgetrocknet. Solche Tinten werden in EP 0 435 923 A1 ausführlich beschrieben.

Neben einer möglichst hohen thermischen Leitfähigkeit werden an das die Wärme vom PTC-Element zur Spiegeloberfläche transportierende Haftklebeband noch besondere Anforderungen im Hinblick auf Wärmescherfestigkeit bei erhöhten Temperaturen, Witterungsbeständigkeit und Haftklebrigkeit bei tiefen Temperaturen gestellt.

Das bestehende Konzept funktioniert gut, erfordert aber einen relativ komplizierten Aufbau, da die PTC-Elemente nicht nur mit dem Glas des Spiegels verklebt werden müssen, sondern auch mit der Trägerplatte des Spiegels, die in vielen Fällen aus dem Kunststoff Acrylnitril/Butadien/Styrol (ABS) besteht. Die Verklebung dieser unterschiedlichen. Materialien stellt ebenfalls besondere Anforderungen an das Haftklebeband.

Die EP 942 059 A beschreibt einen wärmeleitenden und druckempfindlichen Klebstoff, der a) ein Copolymer einer Monomermischung, die Hauptmonomere auf Alkyl(meth)acrylatbasis enthält, sowie b) einen wärmeleitenden Füllstoff enthält, sowie Klebefollen, die mit einer Schicht eines derartigen wärmeleitenden und druckfähigen Klebstoffs ausgerüstet sind.

Die EP 942 060 A beschreibt eine thermisch leitende Haftklebemasse mit guter Wärmeleitfähigkeit, die insbesondere gute Klebeeigenschaften im Hochtemperatur-bereich aufweist. Die Haftklebemasse basiert auf Alkyl(meth)acrylaten und hiermit copolymerisierbaren saure oder basische polare Gruppen aufweisenden Monomeren. Der Haftklebemasse sind thermisch leitfähige Additive zugesetzt, die dieselben polaren Gruppen wie die besagten Monomere aufweisen. Auch hier werden die entsprechenden Klebefollen beschrieben.

Für eine Vereinfachung des Herstellprozesses von beheizbaren Spiegeln besteht somit der Bedarf für ein erwärmbares Haftklebeband, welches die Trägerplatte mit dem Spiegel verklebt und zudem z. B. durch elektrischen Strom oder einen anderen physikalischen oder chemischen Mechanismus beheizbar ist

Gelöst wird die Aufgabe überraschend und für den Fachmann in nicht vorhersehbarer Weise durch ein Flächengebilde, umfassend mindestens eine haftklebrige Schicht, innerhalb derer Wärme erzeugt wird, wie es im unabhängigen Anspruch 1 dargestellt ist.

Die Unteransprüche betreffen bevorzugte Weiterentwicklungen dieses Flächengebildes sowie dessen Verwendung.

Bevorzugt wird die Wärme innerhalb der haftklebrigen Schicht durch den elektrischen Widerstand und/oder die Induktion unter Verwendung eines hochfrequenten Wechselfeldes hervorgerufen. Aber auch chemische Reaktionen oder physikalische Phasenumwandlung (z.b. Kristallisation) sind im erfinderischen Sinne vorteilhaft einsetzbar Erfindungsgemäß können solcher Flächengebilde einmalig oder mehrfach eingesetzt werden, ebenfalls kann der Wärmeerzeugungsprozess einmalig oder reproduzierbar durchführbar sein.

In einer einfachen Ausführungsform besteht das Flächengebilde aus einer singulären Lage einer wärmeerzeugenden Haftklebemasse, welche zum Beispiel Spiegel und Trägerplatte verbindet. Die für eine widerstandselektrische Erwärmung notwendige Kontaktierung ist dann in einem separaten Element, welches auch der Spiegel oder die Spiegelträgerplatte sein kann, untergebracht. Gleiches gilt im Fall einer zur Induktion notwendigen Spule.

In einer zweiten, bevorzugten Ausführungsform sind Kontaktierung oder Spule integraler Bestandteil des Klebebands.

<u>Haftklebemassen</u>

Ein wichtiger Bestandteil des erfinderischen Haftklebebands ist die erwärmbare Haftklebemasse.

Vorteilhaft lassen sich solche Haftklebemassen einsetzen, welche

(a) mindestens eine Klebstoffkomponente und
(b) mindestes ein elektrisch leitfähiges Füllmaterial

umfassen.

Im Falle einer somit elektrisch erwärmbaren Haftklebemasse ist der Zusatz mindestens eines elektrisch leitfähigen Füllmaterials, welches unter Strombeaufschlagung Wärme entwickelt, vorteilhaft. In einer bevorzugten Ausführungsform können Graphite oder Ruße eingesetzt werden. In einer weiter bevorzugten Ausführung ist dieser FGilstoff nanoskalig, d.h. er besitzt in mindestens einer Raumdimension eine Ausdehnung von nicht mehr als 500 nm, bevorzugt nicht mehr als 200 nm, besonders bevorzugt nicht mehr als 50 nm. In einer sehr bevorzugten Ausführungsform wird Leitruß (beispielsweise Printex® XE der Fa. Degussa) eingesetzt. Die Ausprägung des Effektes der elektrischen Erwärmbarkeit der Haftklebemasse kann durch den Füllgrad, das heißt den Massenanteil des Füllmaterials in der Haftklebemasse, bestimmt werden. Der Fullgrad beträgt vorteilhaft zwischen 2 und 20 Gew.-%. Sehr bevorzugt werden zwischen 5 und 12 Gew.-% Füllmaterial eingesetzt.

Die Leitfähigkeit und somit auch die erzielbare Temperatur und Aufheizrate ist abhängig vom Füllgrad. Durch Anhebung des Füllgrades lassen sich höhere Leitfähigkeiten und somit auch höhere Temperaturen erreichen. Weiterhin ist die elektrische Leitfähigkeit und somit die Erwärmbarkeit der Haftklebemasse auch vom Basispolymer der Klebstoffkomponente abhängig. Überraschend wurde gefunden, dass durch geeignete Auswahl von Füllstoff, Füllstoffanteil und Klebstoffkomponente auch der PTC-Effekt erreicht werden kann.

Im Fall der induktiv erwärmbaren Haftklebemasse ist der Zusatz mindestens eines ferro- oder ferrimagnetischen oder superparamagnetischen oder piezoelektrischen Füllmaterials, welches unter Beaufschlagung mit einem elektrischen oder magnetischen Wechselfeld Wärme entwickelt, notwendig. Somit ist eine bevorzugte Ausführungsform des Flächengebildes mit solchen Haftklebemassen ausgerüstet, die

(a) mindestens eine Klebstoffkomponente und
(b) mindestens ein ferromagnetisches, ferrimagnetisches, superparamagnetisches oder piezoelektrisches Füllmaterial

umfassen. Bei der Anwendung elektrischer Wechselfelder sind als Füllmaterialien alle piezoelektrischen Verbindungen geeignet, z.B. Quarz, Turmalin, Bariumtitanat, Lithiumsulfat, Kaliumtartrat, Natriumtartrat, Kallum-Natrium-Tartrat, Ethylendiamintartrat, Ferroelektrika mit Perowskitstruktur und vor allem Btei-Zirkonium-Titanat. Für die Anwendung magnetischer Wechselfelder eignen sich insbesondere die Metalle Aluminium, Cobalt, Eisen, Nickel oder deren Legierungen sowie Metalloxide vom Typ n-Maghemit ($\gamma$-$Fe_2O_3$), n-Magnetit ($Fe_3O4$), Ferrite von der allgemeinen Formel $MeFe_2O_4$, wobei Me für zweiwertige Metalle aus der Gruppe Mangan, Kupfer, Zink, Cobalt, Nickel, Magnesium, Calcium oder Cadmium steht. Besonders bevorzugt sind die superparamagnetischen Partikel von nanoskaliger Größe, sog. "Single-Domain-Partikel", da hierbei eine besonders effektive Erwärmungsrate erreicht werden kann (vgl. WO 02/12409 A1).

Die Ausprägung des Effektes der induktiven Erwärmbarkeit der Haftklebemasse kann durch den Füllgrad, das heißt den Massenanteil des Füllmaterials in der Haftklebemasse, bestimmt werden. Der Füllgrad sollte zwischen 1 und 30 Gew.-% betragen, In einer bevorzugten Auslegung werden zwischen 2 und 20 Gew.-% Füllmaterial eingesetzt. Die erzielbare Temperatur und die Aufheizrate ist abhängig vom Füllgrad. Durch Anhebung des Füllgrades lassen sich höhere Temperaturen erreichen. Eine Temperaturbegrenzung ähnlich des. PTC-Effekts ist durch die Curietemperatur des Füllmaterials gegeben. Bei dieser Temperatur verliert das Material seine ferro-, ferri- bzw. paramagnetischen Eigenschaften, so dass weitere Erwärmung durch Induktion nicht stattfinden kann.

Sehr vorteilhaft weist das induktive Füllmaterial - in Entsprechung zu dem bei den Ausführungen für das elektrische Füllmaterial - in mindestens einer Raumrichtung eine Ausdehnung von nicht mehr als 500 nm, bevorzugt nicht mehr als 200 nm, besonders bevorzugt von nicht mehr als 50 nm auf.

Eine weitere Verbesserung des Trägermaterials kann durch die Zugabe von mindestens einem Füllstoff mit hoher Wärmekapazität, insbesondere mit einer Wärmekapazität von mehr als 0.7 J/gK, erreicht werden. Dies führt durch die Pufferfunktion zu einer Vergleichmäßigung des Aufheizverhaltens und einer verlängerten Abgabe von Wärme nach Beendigung des aktiven Wärmeerzeugungsprozesses. Füllstoffe mit hoher Wärmekapazität sind z.B. Aluminium. Beryllium, Bor, Calcium, Eisen, Graphit, Kalium, Kupfer. Magnesium, Phosphor oder Verbindungen der vorgenannten Stoffe, insbesondere Aluminiumoxid und -chlorid, Calciumcarbonat, Calciumclorid, Kupfersulfat, Magnetit, Haematit, Magnesiumcarbonat und -clorid, Phosphorchlorid, Phosphoroxid

Als Klebstoffkomponente der elektrisch beheizbaren Haftklebemassen können alle Haftklebemassen mit geeigneten haftklebenden Eigenschaften eingesetzt werden. Die zur Herstellung der Klebstoffkomponente dienenden Monomere werden insbesondere dermaßen gewählt, dass die resultierenden Polymere bei Raumtemperatur oder höheren Temperaturen als Haftklebemassen eingesetzt werden können, vorzugsweise derart, dass die resultierenden Polymere haftklebende Eigenschaften entsprechend dem "Handbook of Pressure Sensitive Adhesive Technology" von Donatas Satas (van Nostrand, New York 1989) besitzen.

Zur Erzielung einer für Haftklebemassen bevorzugten Glasübergängstempetatur $T_G$ der Polymere von $T_G \leq 25$ °C werden entsprechend dem vorstehend Gesagten die Monomere sehr bevorzugt derart ausgesucht und die mengenmäßige Zusammensetzung der Monomermischung vorteilhaft derart gewählt, dass sich nach der *Fox*-Gleichung (G1) (vgl. T.G. Fox, Bull. Am. Phys. Soc. 1 (1956) 123) der gewünschte $T_G$-Wert für das Polymer ergibt.

$$\frac{1}{T_G} = \sum_n \frac{w_n}{T_{G,n}} \qquad (G1)$$

Hierin repräsentiert n die Laufzahl über die eingesetzten Monomere, $w_n$ den Massenanteil des jeweiligen Monomers n (Gew.-%) und $T_{G,n}$ die jeweilige Glasübergangstemperatur des Homopolymers aus den jeweiligen Monomeren n in K.

Erfindungsgemäß vorteilhaft lassen sich als Klebstoffkomponente Haftklebemassen auf Basis von Acrylsäure und/oder Methacrylsäure und/oder auf Basis von Estern der vorgenannten Verbindungen einsetzen.

Es sind insbesondere Acrylathaftklebemassen als Klebstoffkomponente geeignet, welche etwa durch radikalische Polymerisation erhältlich sind und die zumindest teilweise auf mindestens einem Acrylmonomer der allgemeinen Formel (1) basieren,

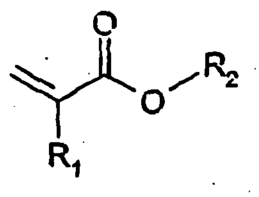

(1)

wobei $R_1$ gleich H oder ein $CH_3$-Rest ist und $R_2$ gleich H ist oder aus der Gruppe der gesättigten, unverzweigten oder verzweigten, substituierten oder nicht-substituierten $C_1$- bis $C_{30}$-Alkylresten gewählt ist. Das mindestens eine Acrylmonomer sollte einen Massenanteil von mindestens 50 % in der Haftklebemasse aufweisen.

Es lassen sich nach einer besonders vorteilhaften Ausgestaltung Polymere als Klebstoffkomponente einsetzen, die

(a1) zumindest teilweise auf mindestens einem Acrylmonomer der allgemeinen Formel $CH_2=C(R_1)(COOR_2)$ basieren, wobei $R_1$ gleich H oder ein $CH_3$-Rest ist und $R_2$ aus der Gruppe der gesättigten, unverzweigten oder verzweigten, substituierten oder nicht-substituierten $C_2$- bis $C_{20}$-Alkylresten gewählt ist, und

(a2) zumindest teilweise auf einen mit dem mindestens einen Acrylmonomer polymerisierbaren Comonomer basieren, welches insbesondere aus Vinylverbindungen mit funktionellen Gruppen, Maleinsäureanhydrid, Styrol, Styrol-Verbindungen, Vinylacetat, Acrylamiden, mit Doppelbindung funktionalisierten Photoinitiatoren gewählt werden kann.

Dabei weist vorzugsweise das mindestens eine Acrylmonomer (a1) einen Massenanteil von 65 bis 100 Gew.-% und das mindestens eine Comonomer (a2) einen Massenanteil von 0 bis 35 Gew.-% in der Klebstoffkomponente auf.

Es hat sich ferner eine mittlere molekulare Masse $M_w$ (Gewichtsmittel) der Klebstoffkomponente von maximal 800.000 g/mol als vorteilhaft erwiesen, insbesondere hinsichtlich der gewünschten mechanischen Eigenschaften der Haftklebemasse.

Die mindestens eine Klebstoffkomponente kann nach einer weiteren Ausführung auch Natur- oder Synthesekautschukmassen umfassen oder auf solchen basieren. Für Klebstofflcomponenten aus Naturkautschuk wird dieser bis zu einem frei wählbaren Molekulargewicht gemahlen und dann mit dem elektrisch leitfähigen Füllstoff additiviert. In einer besonderen Ausführung können auch teilkristalline Polymere wie EVA (Ethylenvinylacetat) oder Polyolefine als Klebstoffkomponente eingesetzt oder zu dieser hinzugefügt werden. Durch die Volumenvergrößerung der kristallinen Phase beim Überschreiten der Kristallitschmelztemperatur wird der PTC-Effekt unterstützt.

In einer sehr bevorzugten Weise werden Acryl- oder Methacrylmonomere der allgemeinen Formel (1) eingesetzt, die Acryl-und Methacrylsäureester umfassen, wobei die Gruppe R2 aus der Gruppe der gesättigten, unverzweigten oder verzweigten, substituierten oder nicht-substituierten C4- bis C14-Alkylresten, insbesondere C4- bis C9-Alkylresten, gewählt ist. Spezifische Beispiele, ohne sich durch diese Aufzählung einschränken zu wollen, sind Methylacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat, und deren verzweigten isomere, beipielsweise Isobutylacrylat, 2-Ethylhexylacrylat, 2-Ethylhexylmethacrylat, Isooctylacrylat, Isooctylmethacrylat.

Weitere einzusetzende Verbindungsklassen sind monofunktionelle Acrylate bzw. Methacrylate der allgemeinen Formel (1), wobei der Rest $R_2$ aus der Gruppe der überbrückten oder nicht-überbrückten Cycloalkylresten mit mindestens 6 C-Atomen gewählt ist. Die Cycloalkylreste können auch substituiert sein, beispielsweise durch $C_1$- bis $C_6$-Alkylgruppen, Halogenatomen oder Cyanogruppen. Spezifische Beispiele sind Cyclohexylmethacrylat, Isobornylacrylat, Isobornylmethacrylat und 3,5-Dimethyladamantylacrylat.

In einer bevorzugten Vorgehensweise werden Acrylmonomere und/oder Comonomere eingesetzt, die einen oder mehrere, insbesondere polare Substituenten aufweisen, beispielsweise Carboxyl-, Sulfonsäure-, Phosphonsäure-, Hydroxyl-, Lactam-, Lacton-, N-substituierte Amid-, N-substituierte Amin-, Carbamat-, Epoxy-, Thiol-, Alkoxy-, Cyan-, Halogenid- und Ethergruppen.

Sehr vorteilhaft im Sinne der Acrylkomponente (a1) eignen sich Monomere, welche aus der folgenden Gruppe ausgewählt sind:

substituierte oder nicht-substituierte Verbindungen,

umfassend Methylacrylat, Methylmethacrylat, Ethylacrylat, n-Butylacrylat, n-Butylmethacrylat, n-Pentylacrylat, n-Hexylacrylat, n-Heplylacrylat, n-Octylacrylat, n-Octylmethacrylat, n-Nlonylacnilat, Laurylacrylat, Stearylacrylat, Behenylacrylat. Isobutylacrylat, 2-Ethylhexylacrylat, 2-Ethythexytmethacrytat, Isooctylacrylat, Isooctylmethacrylat, Cyclohexylmethacrylat, Isobornylacrylat, Isobornylmethacrylat, und 3,5-Dimethyladamantylacrylat.

Es sind ebenfalls moderat basische Comonomere (a2) geeignet, wie einfach oder zweifach N-alkylsubstituierte Amide, insbesondere Acrylamide. Spezifische Beispiele sind hier N,N-Dimethylacrylamid, N,N-Dimethylmethacrylamid, N-tert-Butylacrylamid, N-Vinylpyrrolidon; N-Vinyilactam, Dimethylaminoethylacrylat, Dimethylaminoethylmethacrylat, Diethylaminoethylacrylat, Diethylaminoethylmethacrylat. N-Methylolacrylamid, N-Methylolmethacrylamid, N-(Butoxymethyl)methacrylamid, N-(Ethoxymethyl)acrylamid, N-Isopropylacrylamid, wobei diese Aufzählung nicht abschließend ist.

Weitere bevorzugte Beispiele für Comonomere (a2) sind Hydroxyethylacrylat, Hydroxyethylmethacrylat, Hydroxypropylacrylat, Hydroxypropylmethacrylat, Allylalkohol, Maleinsäureanhydrid, Itaconsäureanhydrid, Itaconsäure, Glyceridylmethacrylat, Phenoxyethylacrylat, Phenoxyethylmethacrylat, 2-Butoxyethylacrylat, 2-Butoxyethylmethacrylat, Cyanoethylacrylat, Cyanoethylmethacrylat, Glycerylmethacrylat, 6-Hydroxyhexylmethacrylat, Vinylessigsäure, Tetrahydrofurfurylacrytat; β-Acryloyloxypropionsäure, Trichloracrylsäure, Fumarsäure, Crotonsäure, Aconitsäure, Dimethylacrylsäure, wobei diese Aufzählung nicht abschließend ist.

In einer weiteren sehr, bevorzugten Vorgehensweise werden als Comonomere (a2) Vinylverbindungen, insbesondere Vinylester, Vinylether, Vinylhalogenide, Vinylidenhalogenide, Vinylverbindungen mit aromatischen Cyclen und Heterocyclen in α-Stellung eingesetzt. Auch hier seien nicht ausschließlich einige Beispiele genannt, wie Vinylacetat, Vinylformamid, Vinylpyridin, Ethylvinylether, Vinylchlorid, Vinylidenchlorid, Styrol und Acrylonitril.

Besonders vorteilhaft kann das mindestens eine Comonomer (a2) ein Photoinitiator mit einer copolymerisierbaren Doppelbindung sein, insbesondere ausgewählt aus der Gruppe enthaltend Morrish-I- oder Norrish-II-Photoinitiatoren, Benzoinacrylate oder acrylierte Benzophenone.

In einer weiteren bevorzugten Vorgehensweise werden zu den beschriebenen Comonomeren (a2) Monomere hinzugesetzt, die eine hohe statische Glasübergangstemperatur besitzen. Als Komponenten eigenen sich aromatische Vinylverbindungen, wie z. B. Styrol, wobei bevorzugt die aromatischen Kerne aus $C_4$- bis $C_{18}$-Bausteinen bestehen und auch Heteroatome enthalten können. Besonders bevorzugte Beispiele sind 4-Vinylpyridin, N-Vinylphthalimid, Methylstyrol, 3,4-Dimethoxystyrol, 4-Vinylbenzoesäure, Benzylacrylat, Benzylmethacrylat, Phenylacrylat, Phenylmethacrylat, t-Butylphenyladrylat, t-Butylphenylmethacrylat, 4-Biphenylacrylat und -methacrylat, 2-Naphthylacrylat und -methacrylat sowie Mischungen aus denjenigen Monomeren, wobei diese Aufzählung nicht abschließend ist.

Zur Optimierung der klebtechnischen Eigenschaften können den erfinderischen Haftklebemassen Harze beigemischt werden. Als zuzusetzende klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie $C_5$- bis $C_8$- sowie andere Kohlenwasserstoffharze. Beliebige Kombinationen dieser und weiterer Harze können eingesetzt werden, um die Eigenschaften der resultierenden Klebmasse wunschgemäß einzustellen. Im Allgemeinen lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen, In einer bevorzugten Auslegung werden Harze eingesetzt, die die elektrische Leitfähigkeit und die Erwärmbarkeit - auch über einen längeren Zeitraum - nicht vermindern.

Es ist vorteilhaft, wenn teilkristalline Polymere als Klebstoffkomponente eingesetzt oder zu dieser hinzugefügt werden.

Bevorzugt werden die für die erfinderischen Flächengebilde eingesetzten Haftldebemassen vernetzt, wobei hohe Vernetzungsgrade angestrebt werden, die auch den PTC-Effelct unterstützen (s. EP 0 311 142 A1 oder US 4 775 778 A). Nach einer bevorzugten Ausgestaltung der Erfindung weist die mindestens eine IClebsfofikomponente einen Vernetzungsgrad auf, der mindestens einem Gelwert von 35%, insbesondere von mindestens 60 % entspricht. Dabei wird vorliegend als Gelwert das Verhältnis von nicht in Toluol löslicher Klebstoffkomponente zu löslicher Klebstoffkomponente definiert. In einer bevorzugten Vorgehensweise werden die Haftklebemassen mit Elektronenstrahlen vernetzt. Typische Bestrahlungsvorrichtungen, die zum Einsatz kommen können, sind Linearkathodensysteme, Scannersysteme bzw. Segmentkathodensysteme, sofern es sich um Elektronenstrahlbeschleunlger handelt. Eine ausführliche Beschreibung des Standes der Technik und die wichtigsten Verfahrensparameter findet man bei Skelhorne, Electron Beam Processing, in Chemistry and Technology of UV and EB formulation for Coatings, Inks and Paints, Vol. 1, 1991, SITA, London. Typische Beschteunigungsspannungen liegen im Bereich zwischen

50 und 500 kV, vorzugsweise im Bereich zwischen 80 und 300 kV. Die angewandten Streudosen bewegen sich zwischen 5 bis 150 kGy, insbesondere zwischen 20 und 100 kGy. Es können auch andere Verfahren eingesetzt werden, die hochenergetische Bestrahlung ermöglichen.

Weiterhin ist Bestandteil der Erfindung die Variation der elektrischen Leitfähigkeit und somit der thermischen Erwärmung über den Vernetzungsgrad. Durch Erhöhung der ES-Dosis (und damit auch des Vernetzungsgrades) lässt sich die elektrische Leitfähigkeit erhöhen und bei gleichem Strom erhöht sich die Temperatur der Haftklebemasse. Ebenso lässt sich über den Vernetzungsgrad der PTC-Effekt einstellen.

Zur Verringerung der erforderlichen Dosis können der Haftklebemasse Vernetzer und/oder Promotoren zur Vernetzung beigemischt werden, insbesondere durch Elektronenstrahlen oder thermisch anregbare Vernetzer und/oder Promotoren. Geeignete Vernetzer für die Elektronenstrahlvernetzung sind bi- oder multifunktionelle Acrylate oder Methacrylate. In einer weiteren bevorzugten Auslegung werden die Haftklebemassen mit thermisch aktivierbaren Vernetzern vernetzt. Hierzu werden bevorzugt Metallchelate, bi- oder multifunktionelle Epoxide, bi- oder multifunktionelle Hydroxide sowie bi- oder multifunktionelle Isocyanate beigemischt.

Weiterhin können der Haftklebemasse optional, aber vorteilhaft Weichmacher (Ptastifizierungsmittel) und/oder weitere Füllstoffe zugesetzt sein.

Herstellverfahren für die Haftklebemassen

Vorteilhaft, herstellen lassen sich die für die erfindungsgemäßen Flächengebilde eingesetzten elektrisch oder induktiv erwärmbaren Haftklebemassen nach einem Verfahren, wobei

(a) mindestens eine Klebstoffkomponente durch zumindest teilweise in Lösung oder in Substanz durchführbare Polymerisation mindestens eines Monomers, gegebenenfalls in Gegenwart mindestens eines Comonomers, hergestellt wird und
(b) mindestens ein elektrisch leitfähiges oder ferro- bzw. ferrimagnetisches Füllmaterial der Klebstoffkomponente vor der Polymerisation dem mindestens einen Monomer und gegebenenfalls dem mindestens einem Copolymer zugemengt wird oder nach der Polymerisation der mindestens einen Klebstoffkomponente zugemengt wird.

Zur Herstellung insbesondere der Poly(meth) acrytathaftkiebemassen werden vorteilhaft konventionelle radikalische Polymerisationen durchgeführt. Für die radikalisch verlaufenden Polymerisationen werden bevorzugt Initiatorsysteme eingesetzt, die zusätzlich weitere radikalische initiatoren zur Polymerisation enthalten, insbesondere thermisch zerfallende radikalbildende Azo- oder Peroxo-Initiatoren. Prinzipiell eignen sich jedoch alle für Acrylate dem Fachmann geläufigen, üblichen Initiatoren. Die Produktion von C-zentrierten Radikalen ist im Houben Weyl, Methoden der Organischen Chemie, Vol. E 19a, S. 60 - 147 beschrieben. Diese Methoden werden in bevorzugter Weise in Analogie angewendet.

Beispiele für Radikalquellen sind Peroxide, Hydroperoxide und Azoverbindungen. Als einige nicht ausschließliche Beispiele für typische Radikalinitiatoren seien hier genannt Kaliumperoxodisulfat, Dibenzoylperoxid, Cumolhydroperoxid, Cyclohexanonperoxid, Ditertbutylperoxid, Azodiisosäurebutyronitril, Cyclohexylsulfonylacetylperoxid, Diisopropylpercarbonat, t-Butylperoktoat, Benzpinacol. Sehr bevorzugt wird als radikalischer Initiator 1,1'-Azo-bis-(cyclohexancarbonsäurenitril) (Vazo 88™ der Fa. DuPont) oder Azodisobutyronitril (AIBN) verwendet.

Die elektrisch leitfähigen oder induktiv aktiven Füllmaterialien können den Monomeren vor der Polymerisation und/oder nach Beendigung der Polymerisation beigemischt werden. Vorzugsweise wird das Füllmaterial nach der Polymerisation zu einer Schmelze der mindestens einen Klebstoffkomponente kompoundiert.

Die Polymerisation kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel sind reine Alkane (z. B. Hexan, Heptan, Octan, Isooctan), aromatische Kohlenwasserstoffe (z. B. Benzol, Toluol, Xylol), Ester (z. B. Essigsäureethylester, Essigsäurepropyl-, -butyl- oder -hexylester), halogenierte Kohlenwasserstoffe (z. B. Chlorbenzol), Alkanole (z. B. Methanol, Ethanol, Ethylenglycol, Ethylengtycolmonomethylether) und Ether (z. B. Diethylether, Dibutylether) oder Gemische davon. Die wässrigen Polymerisationsreaktionen können mit einem mit Wasser mischbaren oder hydrophilen Colösungsmittel versetzt werden, um zu gewährleisten, dass das Reaktionsgemisch während des Monomerumsatzes in Form einer homogenen Phase vorliegt. Vorteilhaft verwendbare Colösungsmittel für die vorliegende Erfindung werden gewählt aus der folgenden Gruppe, bestehend aus aliphatischen Alkoholen, Glycolen, Ethern, Glycolethern, Pyrrolidinen, N-Alkylpyrrolidinonen, N-Alkylpyrrolidonen, Polyethylenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen, sowie Derivaten und Gemischen davon.

Die Polymerisationszeit beträgt - je nach Umsatz und Temperatur - zwischen 2 und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Zur Initiierung der Polymerisation ist für die thermisch zerfallenden Initiatoren der Eintrag von Wärme essentiell. Die Polymerisation kann für die thermisch zerfallenden Initiatoren durch Erwärmen auf 50 bis 160 °C, je nach Initiatortyp, initiiert werden.

Für die Herstellung kann es auch von Vorteil sein, die Acryiathaftklebemassen in Substanz zu polymerisieren. Hier eignet sich insbesondere, die Präpolymsrisationstechnik einzusetzen. Die Polymerisation wird mit UV-Licht initiiert, aber nur zu einem geringen Umsatz ca. 10 bis 30 % geführt. Anschließend kann dieser Polymersirup z. B. in Folien eingeschweißt werden (im einfachsten Fall Eiswürfel) und dann in Wasser zu, hohem Umsatz durchpolymerisiert werden. Diese Pellets lassen sich dann als Acrylatschmelzkleber einsetzen, wobei für den Aufschmelzvorgang besonders bevorzugt Follenmateriallen eingesetzt werden, die mit dem Polyacrylat kompatibel sind. Auch für diese Präparationsmethode lassen sich die elektrisch leitfähigen oder induktiv aktiven Materialzusätze vor oder nach der Polymerisation zusetzen.

Ein anderes vorteilhaftes Herstellungsverfahren für die Poly(meth)acrylathaftktebemassen ist die anionische Polymerisation. Hier werden als Reaktionsmedium bevorzugt inerte Lösungsmittel verwendet, wie z. B. aliphatische und cycloaliphatische Kohlenwasserstoffe, oder auch aromatische Kohlenwasserstoffe.

Das lebende Polymer wird in diesem Fall i m Allgemeinen durch die Struktur $P_L$(A)-Me repräsentiert, wobei Me ein Metall der Gruppe 1, wie z. B. Lithium, Natrium oder Kalium, und $P_L$(A) ein wachsendes Polymer aus den Acrylatmonomeren ist. Die Molmasse des herzustellenden Polymers wird durch das Verhältnis von Initiatorkonzentration zu Monomerkonzentration kontrolliert. Als geeignete Polymerisationsinitiatoren eignen sich z. B. n-Propyllithium, n-Butyllithlum, sec-Butyllithium, 2-Naphthyllithlum, Cyclohexyllithium oder Octyllithium, wobei diese Aufzählung nicht den Anspruch auf Vollständigkeit besitzt. Ferner sind Initiatoren auf Basis von Samarium-Komplexen zur Polymerisation von Acrylaten bekannt (Macromolecules, 1995, 28, 7886) und hier einsetzbar.

Weiterhin lassen sich auch difunktionelle Initiatoren einsetzen, wie beispielsweise 1,1,4,4-Tetraphenyl-1,4-dilithiobutan oder 1,1,4,4-Tetraphenyl-1,4-dilithioisobutan. Coinitiatoren lassen sich ebenfalls einsetzen. Geeignete Coinitiatoren sind unter anderem Lithiumhalogenide, Alkalimetallalkoxide oder Alkylaluminium-Verbindungen. In einer sehr bevorzugten Version sind die Liganden und Coinitiatoren so gewählt, dass Acrylatmonomere, wie z. B. n-Butylacrylat und 2-Ethylhex-ylacrylat, direkt polymerisiert werden können und nicht im Polymer durch eine Umesterung mit dem entsprechenden Alkohol generiert werden müssen.

Zur. Herstellung von Polyacrylathaftklebemassen mit einer engen Molekulargewichtsverteilung eignen sich auch kontrollierte radikalische Polymerisationsmethoden.

<u>Herstellung von Haftklebabändern</u>

Eine vorteilhafte Ausführung der Erfindung betrifft derartige Flächengebilde (insbesondere in Form elektrisch erwärmbarer Haftklebebänder), die einen Film einer erwärmbaren Haftklebemasse und eine elektrisch leitfähige Kontaktierung umfassen.

Vorteilhaft geeignete Kontaktierungen sind Metallfolien, Metallnetze oder metallbeschichtete Kunststofffolien (Polymerfolien).

In einem einfachen Fall wird die erwärmbare Haftklebemasse mit einem elektrisch leitfähigen Metall kontaktiert In bevorzugter Weise werden Metalle eingesetzt, die nicht oder nur wenig über längere Zeiträume korrodieren. In sehr bevorzugten Ausführungen wird beispielsweise Kupfer oder Aluminium eingesetzt, wobei aber auch Silber- oder Gold-Kontaktierungen vorgenommen werden können. Dabei kann das Metall z.B. durch galvanische oder Bedampfungsverfahren direkt auf der Haftklebemasse abgeschieden werden oder in Form einer kontinuierlichen oder durchbrochenen Schicht aufkaschiert werden.

Neben Metallfolien lassen sich aber auch Polymerfolien einsetzen, die eine metallisierte Oberfläche aufweisen.

Die Figuren 1 bis 7 zeigen beispielhaft typische Produktaufbauten der erfindungsgemäßen Flächengebilde.

| | |
|---|---|
| Figur 1: | Kontaktierung über Al-Folie |
| Figur 2: | Kontaktierung über Al-Folie und Metallnetz |
| Figur 3: | Kontaktierung über metallisierte Folie |
| Figur 4: | Ganzflächig kontaktierte Haftklebemasse: (a) Querschnitt, (b) Aufsicht |
| Figur 5: | Einseitig mit einer Kammstruktur kontaktierte Klebemasse: (a) Querschnitt, (b) Aufsicht |
| Figur 6: | erfindungsgemäßes mehrschichtiges Flächengebilde |
| Figur 7: | erfindungsgemäßes Flächengebilde mit zweitägigem Aufbau der erwärmbaren Haftklebemasse und flächiger Kontaktierung |

Mögliche Anordnungen solcher kontaktierter Haftklebebänder sind in den Figuren 1 bis 5 dargestellt. Gemäß Figur 1 ist die elektrisch erwärmbare Haftklebemasse 10 beidseitig und vollflächig mit einer Metallfolie 12, insbesondere einer Aluminium- oder Kupferfolie, kontaktiert. Nach Figur 2 ist die Haftklebemasse 10 auf einer Seite ebenfalls vollflächig mit einer Metallfolie 12 kontaktiert und auf der anderen Seite teilflächig mit einem Metallnetz l4. Schließlich zeigt Figur 3 einen Produktaufbau, in dem die Haftklebemasse 10 auf beiden Seiten mit einer metallisierten Kunststofffolie kontaktiert ist, wobei mit 16 jeweils die Kunststofffolie und mit 18 ihre Metallbeschichtung bezeichnet ist.

Die Kontaktierungen können sich beidseitig ganzflächig über die gesamte Klebebandoberfläche erstrecken oder die Oberfläche ein oder beidseitig nur partiell, insbesondere in Form von Linien, Punkten, Rastern, Kämmen oder anderen geometrischen Formen, abdekken. Im ersteren Fall ergibt sich ein Stromfluss quer zur Flächenausdehnung der erwärmbaren Haftklebemasse (z-Richtung), während sich im zweiten Fall ausschließlich oder zusätzlich ein Stromfluss innerhalb der Flächenausdehnung der erwärmbaren Haftklebemasse ergibt (x-y-Richtung). Die Figuren 4 und 5 verdeutlichen beispielhaft und ohne die Erfindung unnötig einschränken zu wollen solche Ausführungen.

Es bedeuten: 10 = erwärmbare Haftklebemasse,12 = Metallfolie, 20 = Elektrodenstruktur

Weitere vorteilhafte Produktgestaltungen sind realisierbar. Ein besonders vorteilhafter Aufbau des Trägermaterials umfasst neben der erwärmbaren Haftklebemasse noch weitere Haftkleberschichten und Kontaktierungsschichten sowie abdeckende Materialien (vgl. ein Beispiel eines solchen Flächengebildes in Figur 6; es bedeuten: 10 = erwärmbare Haftklebemasse, 12 = Metallfolie, 22 = weitere Haftklebemasse, 24 = silikonisierte PET-Folie).

In einer bevorzugten Ausführungsform wird die haftklebrige erwärmbare Schicht aus mehreren Lagen desselben oder ähnlicher Materialien aufgebaut. Insbesondere im Fall der Erwärmung durch elektrischen Widerstand werden so mögliche Kurzschlüsse durch Füllstoffagglomerate vermieden. In Figur 7 ist ein solcher Aufbau mit zweilagiger erwärmbarer Haftklebemasse dargestellt.

Es bedeuten: 10 = erwärmbare Haftklebemasse, 12 = Metallfolie

In einer weiteren vorteilhaften Ausführung ist das erwärmbare Flächengebilde mit einem Mechanismus ausgestattet, der bei erstmaliger Erwärmung des Flächengebildes zu einer Kohäsionserhöhung der haftklebrigen erwärmbaren Schicht und/oder einer weiteren Haftkleberschicht führt. Dies könnte beispielsweise eine Erhöhung der Vernetzungsdichte durch eine thermisch initilerte Nachvernetzung sein. Vorteilhafterweise wird eine solches Flächengebilde derart verwendet, dass zunächst die Verklebung mit mindestens einem Substrat hergestellt wird, sodann die erstmalige Erwärmung vorgenommen wird und sich damit eine Verfestigung der Verklebung einstellt.

Vorteilhaft für die Herstellung der erfindungsgemäßen Flächengebilde wird ein Trägermaterial mit einer Lösung oder einer Schmelze (im so genannten Hotmelt-Verfahren) mit der erwärmbaren Haftklebemasse beschichtet. Vorzugsweise handelt es sich bei dem Trägermaterial um eine von der Haftklebemasse abziehbare Kunststofffolie oder ein Trennpapier. Derartige Haftklebebänder eignen sich insbesondere auch zur übertragung des Haftklebemassenfilms auf die oben genannte Kontaktierung. Aber auch das Kontaktmaterial selbst, z.B. eine Metallfolie oder eine metallisierte Polymerfolie, oder ein die Kontaktierung bzw. die Induktionsspule oder chemisch aktive Substanzen enthaltendes Trägermaterial, kann beschichtet werden.

Zur Herstellung der erfinderischen Haftklebebänder können die Haftklebemassen, aus Lösung oder sehr bevorzugt als Hotmelt-Systeme (also aus der Schmelze) beschichtet werden. Für das Herstellungsverfahren kann es daher erforderlich sein, das Lösemittel von der Haftklebemasse zu entfernen. Hier können im Prinzip alle dem Fachmann bekannten Verfahren eingesetzt werden. Ein sehr bevorzugtes Verfahren ist die Aufkonzentration über einen Ein- oder Doppelschneckenextruder. Der Doppelschneckenextruder kann gleich- oder gegenläufig betrieben werden. Das Lösemittel oder Wasser wird bevorzugt über mehrere Vakuumstufen abdestilliert. Zudem wird je nach Destillationstemperatur des Lösemittels gegengeheizt. Die Restlösemittelanteile betragen bevorzugt weniger als 1 %, mehr bevorzugt weniger als 0,5 % und sehr bevorzugt weniger als 0.2 %.

Für die Beschichtung aus der Schmelze als Hoimelt-System wird bevorzugt das elektrisch leitfähige oder induktiv aktive Füllmaterial zu der Schmelze kompoundiert.

Hierbei ist eine homogene Einarbeitung im erfindungsgemäßen Sinne wünschenswert. Homogene Verteilungen des Füllmaterials in der Haftklebemasse werden bevorzugt durch Kompoundierung in Doppelschneckenextrudern oder Planetwalzenextrudern erreicht. Die Doppelschneckenextruder können gleich- oder gegenläufig betrieben werden.

Vorteil dieses Prozesses ist die nur sehr kurzfristige Kontaminierung des Herstellprozesses mit dem Füllmaterial sowie die Vermeidung von Lösemitteln.

Nach der Kompoundierung wird bevorzugt der Hotmelt aus mit über eine Schmelzdüse oder über eine Extrusionsdüse oder über ein Walzenauftragswerk auf ein Trägermaterial beschichtet.

In einer sehr bevorzugten Ausführung werden Transfer-Tapes hergestellt. Als Trägermaterial eignen sich z. B. alle silikonisierten oder fluorierten Folien mit einer Releasewirkung. Als Folienmaterialien seien hier nur beispielhaft BOPP, MOPP, PET, PVC, PUR, PE, PE/EVA, EPDM, PP und PE genannt. Weiterhin lassen sich für Transfertapes auch Trennpapiere (Glassine Papiere, Kraft Papiere, polyolefinisch beschichtete Papiere) einsetzen.

Das erfindungsgemäße Flächengebilde weist eine hohe Erwärmungsleistung auf und eignet sich zur Verwendung als Haftklebeband, das neben einer Verklebungs- auch eine Beheizungsfunktion erfüllt, etwa für die Verklebung von beheizbaren Spiegeln.

Entsprechend betrifft die Erfindung die Verwendung der vorgenannt beschriebenen Flächengebilde zur Beheizung von mit derartigen Flächengebilden verklebten Substraten, insbesondere in der Automobilindustrie.

Bei einer vorteilhaften Verwendung der erfindungsgemäßen Flächengebilde wird die Beheizung des Substrates durch Erwärmung des Flächengebildes hervorgerufen, wobei das Flächengebilde auf mindestens einen Untergrund appliziert ist, der mit mindestens einem

elektrischen Kontakt oder mindestens einer Einrichtung zur Erzeugung eines elektrischen oder magnetischen Feldes oder mindestens einer chemischen Substanz, welche in der Lage ist, eine exotherme Reaktion innerhalb des Flächengebildes zu initiieren, ausgerüstet ist, wobei insbesondere der Untergrund eines der verklebten Substrate selbst ist (aber nicht sein muss).

Letztere Verwendung eignet sich insbesondere auch für solche Ausführungsformen der erfindungsgemäßen Flächengebilde, bei denen ein elektrischer Kontakt oder eine Vorrichtung zur Erzeugung eines Feldes nicht in das Flächengebilde selbst integriert ist.

Experimente

Die Erfindung wird im Folgenden durch Experimente beschrieben, ohne sich durch die Wahl der untersuchten Proben unnötig beschränken zu wollen.

Folgende Testmethoden wurden angewendet.

Bestimmung des mittleren Molekulargewichtes (Test A)

Die Bestimmung des mittleren Molekulargewichtes $M_w$ und der Polydisperisität PD der Klebstoffkomponente erfolgte über die Gelpermeationschromatographie (GPC). Als Eluent wurde THF mit 0,1 Vol.-% Trifluoressigsäure eingesetzt. Die Messung erfolgte bei 25°C. Als Vorsäule wurde PSS-SDV, 5 $\mu$, $10^3$Å, ID 8,0 mm x 50 mm verwendet. Zur Auftrennung wurden die Säulen PSS-SDV, 5 $\mu$, $10^3$ sowie $10^5$ und $10^6$ Å mit jeweils ID 8,0 mm x 300 mm eingesetzt. Die Probenkonzentration betrug 4 g/l, die Durchflussmenge 1,0 ml pro Minute. Es wurde gegen PMMA-Standards gemessen.

Messung der Erwärmbarkeit (Test B)

Zur Ermittlung der elektrischen Erwärmbarkeit des Materials wurde die Temperaturerhöhung nach elektrischer Spannungsbeaufschlagung gemessen. Die Messung der Temperatur erfolgte mit einem IR-Thermometer. Zur Kontaktierung wurde gemäß Figur 1 ein 50 $\mu$m dicker Film der erwärmbaren Haftklebemasse doppelseitig mit jeweils einer 25 x 25 $mm^2$ großen u nd 50 $\mu$m dicken Al-Folie versehen (laminiert) und über diese Elektroden eine Spannung von 12 Volt über einen Transformator angelegt. Die obere Seite war positiv, die untere Seite negativ geladen. Die Temperatur wurde nach 30 Sekunden direkt auf der Oberfläche der Haftklebemasse gemessen und in °C angegeben.

Zur Ermittlung des PTC-Effekts wurde weiterhin die Temperaturerhöhung nach Strombeaufschlagung im zeitlichen Verlauf gemessen. Die Messung der Temperatur erfolgte mit einem IR-Thermometer. Für das Testmuster wurde gemäß Figur 7 ein 50 $\mu$m dicker Film der erwärmbaren Haftklebemasse in einer doppelten Lage übereinanderkaschiert, von beiden Seiten mit jeweils einer 25 x 25 $mm^2$ großen und 50 $\mu$m dicken Al-Folie versehen (laminiert) und über diese Elektroden eine Spannung von 13.8 Volt über einen Transformator angelegt. Die obere Seite war positiv, die untere Seite negativ geladen.

180°-Kiebkrafttest (Test C)

Zur Bestimmung der Klebkraft der Trägermaterialien wurde ein 20 mm breiter Streifen einer auf Polyester oder silikonisiertem Trennpapier gecoateten Haftklebemasse auf Stahlplatten aufgebracht. Es wurden - je nach Richtung und Reckung - Längs- oder Quermuster auf der Stahlplatte verklebt. Der Haftklebestreifen wurde zweimal mit einem 2 kg Gewicht auf das Substrat aufgedrückt. Das Klebeband wurde anschließend sofort mit 30 mm/min und im 180°-Winkel vom Substrat abgezogen. Die Stahlplatten wurden zuvor zweimal mit Aceton und einmal mit Isopropanol gewaschen. Die Messergebnisse sind in N/cm angegeben und sind gemittelt aus drei Messungen. Alle Messungen wurden bei Raumtemperatur unter klimatisierten Bedingungen durchgeführt.

Bestimmung des Gelwerts (Test D)

Die sorgfältig getrockneten lösungsmittelfreien Klebstoffproben werden in ein Vliestütchen aus Polyethylen (Tyvek-Vlies) eingeschweißt. Aus der Differenz der Probengewichte vor der Extraktion und nach der Extraktion durch Toluol wird der Gelwert, also der nicht in Toluol lösliche Gewichtsanteil des Polymers bestimmt.

Messung des PTG-Effekts (Test E)

Das haftklebrige erwärmbare Trägermaterial wurde mit einer kammförmigen Leiterstruktur, welche sich auf einem PET-Trägermaterial befand, analog Figur 5 auf der einen Seite kontaktiert und auf der anderen Seite auf eine Spiegeloberfläche appliziert. Dieser Aufbau wurde auf -20 °C gekühlt, dann in einen Wärmeschrank gelegt und erwärmt. Während der Erwärmung wurde der elektrische Widerstand der Anordnung stromlos mittels eines Ohmmeters gemessen.

Herstellung der Proben

**Klebstoffkomponente 1**

Ein für radikalische Polymerisationen konventioneller 200 L-Reaktor wurde mit 24 kg Acrylamid, 64 kg 2-Ethylhexylacrylat, 6,4 kg N-Isopropylacrylamid und 53,3 kg Aceton/Isopropanol (85:15) befüllt. Nach 45 Minuten Durchleiten mit Stickstoffgas unter Rühren wurde der Reaktor auf 58 °C hochgeheizt und 40 g 2,2'-Azoisobuttersäurenitril (AIBN) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 40 g AIBN hinzugegeben. Nach 5 und 10h wurde mit jeweils 15 kg Aceton/Isopropanol (85:15) verdünnt. Nach 6 und 8 h

wurden jeweils 100 g DIcyclohexylperoxydicarbonat (Perkadox 16®, Fa. Akzo Nobel) gelöst in jeweils 800 g Aceton hinzugegeben. Die Reaktion wurde nach 24 h Reaktionszeit abgebrochen und auf Raumtemperatur abgekühlt.

Die Bestimmung des Molekulargewichtes nach Test A ergab ein $M_w$ = 341.000 g/mol bei einer Polydispersität $M_w/M_n$ = 5,9.

**Klebstoffkomponente 2**

Ein für radikalische Polymerisationen konventioneller 200 L-Reaktor wurde mit 12 kg Acrylamid, 74 kg 2-Ethylhexylacrylat, 4,8 kg N-Isopropylacrylamid und 53,3 kg Aceton/lsopropanol (87:13) befüllt Nach 45 Minuten Durchleiten mit Stickstoffgas unter Rühren wurde der Reaktor auf 58 °C hochgeheizt und 40 g 2,2'-Azolsobuttersäurenitril (AIBN) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 40 g AIBN hinzugegeben. Nach 5 und 10 h wurde mit jeweils 15 kg Aceton/Isopropanol (87:13) verdünnt. Nach 6 und 8 h wurden jeweils 100 g Dicyclohexylperoxydicarbonat (Perkadox 16®, Fa. Akzo Nobel) gelöst in jeweils 800 g Aceton hinzugegeben. Die Reaktion wurde nach 24 h Reaktionszeit abgebrochen und auf Raumtemperatur abgekühlt.

Die Bestimmung des Molekulargewichtes nach Test A ergab ein $M_w$ = 408.000 g/mol bei einer Polydispersität $M_w/M_n$ = 5,8.

**Beispiel 1:**

Klebstoffkomponente 1 wurde mit 8 Gew.-% Leitruß (Printex XE, Fa. Degussa) in Lösung abgemischt und anschließend über einen Streichbalken auf ein silikonisiertes Glassine Trennpapier der Fa. Laufenberg beschichtet. Nach Trocknen für 10 Minuten bei 120 °C betrug die Dicke der Haftklebemassenschicht 50 µm.

Diese Haftklebemasse wurde anschließend durch Elstaronenbestrahlung vernetzt. Die Elektronenbestrahlung erfolgte mit einem Gerät der Fa. Electron Crosslinking AB, Halmstad, Schweden. Das beschichtete Haftklebeband wurde dabei über eine standardmäßig vorhandene Kühlwalze unter dem Lenard-Fenster des Beschleunigers hindurch geführt. Dabei wurde in der Bestrahlungszone der Luftsauerstoff durch Spülen mit reinem Stickstoff verdrängt. Die Bahngeschwindigkeit betrug 10 m/min. Die ES-Dosis bei Beispiel 1 betrug 50 kGray bei einer Beschleunigungsspannung von 180 kV.

**Beispiel 2:**

Klebstoffkomponente 1 wurde mit 12 Gew.-% Leitruß (Printex XE, Fa. Degussa) in Lösung abgemischt und anschließend über einen Streichbalken auf ein silikonisiertes Glassine Trennpapier der Fa. Laufenberg beschichtet. Nach Trocknen für 10 Minuten bei 120 °C betrug die Dicke der Haftklebemassenschicht 50 µm.

Die Haftklebemasse wurde anschließend gemäß Beispiel 1 durch Elektronenbestrahlung vernetzt. Die ES-Dosis bei Beispiel 2 betrug 50 kGray bei einer Beschleunigungsspannung von 180 kV.

**Beispiel 3:**

Klebstoffkomponente 2 wurde mit 12 Gew.-% Leitruß (Printex XE, Fa. Degussa) in Lösung abgemischt und anschließend über einen Streichbalken auf ein silikonisiertes Glassine Trennpapier der Fa. Laufenberg beschichtet. Nach Trocknen für 10 Minuten bei 120 °C betrug die Dicke der Haftkiebemassenschicht 50 µm.

Die Haftklebemasse wurde anschließend gemäß Beispiel 1 durch Elektronenbestrahlung vernetzt. Die ES-Dosis bei Beispiel 3 betrug 50 kGray bei einer Beschleunigungsspannung von 180 kV.

**Beispiel 4:**

Klebstoffkomponente 1 wurde mit 12 Gew.-% Leitruß (Printex XE, Fa. Degussa) in Lösung abgemischt und anschließend über einen Streichbalken auf ein silikonisiertes Glassine Trennpapier der Fa. Laufenberg beschichtet. Nach Trocknen für 10 Minuten bei 120 °C betrug die Dicke der Haftklebemassenschicht 50 µm.

Die Haftklebemasse wurde anschließend gemäß Beispiel 1 durch Elektronenbestrahlung vernetzt. Die ES-Dosis bei Beispiel 4 betrug 30 kGray bei einer Beschleunigungsspannung von 180 kV.

**Beispiel 5:**

Klebstoffkomponente 1 wurde mit 12 Gew.-% Leitruß (Printex XE, Fa. Degussa) in Lösung abgemischt und anschließend über einen Streichbalken auf ein silikonisiertes Glassine Trennpapier der Fa. Laufenberg beschichtet Nach Trocknen für 10 Minuten bei 120 °C betrug die Dicke der Haftklebemassenschicht 50 µm.

Die Haftklebemasse wurde anschließend gemäß Beispiel 1 durch Elektronenbestrahlung vernetzt. Die ES-Dosis bei Beispiel 5 betrug 80 kGray bei einer Beschleunigungsspannung von 180 kV.

**Beispiel 6:**

Eine Klebstoffkomponente wurde analog der Klebstoffkomponente 1 mit einer Komonomerenzusammensetzung von 44.5 % 2-Ethylhexylacrylat, 44.5 % n-Butylacrylat, 8 % Methylacrylat und 3 % Acrylsäure hergestellt. Die Bestimmung des Molekulargewichtes nach Test A ergab ein $M_w$ = 650000 g/mol bei einer Polydispersität $M_w/M_n$ = 7,0. Diese Klebstoffkomponente wurde mit 11.25 Gew.-% Leitruß (Printex XE, Fa. Degussa) in Lösung abgemischt und anschließend über einen Streichbalken auf ein silikonisiertes Glassine Trennpapier der Fa. Laufenberg beschichtet. Nach. Trocknen für 10 Minuten bei 120 °C betrug die Dicke der Haftklebemassenschicht 100 μm. Die Haftklebemasse wurde anschließend gemäß Beispiel 1 durch Elektronenbestrahlung vernetzt. Die ES-Dosis betrug 60 kGray bei einer Beschleunigungsspannung von 180 kV.

Resultate

Zur Bestimmung des Vernetzungsgrades der nach den Beispielen 1 bis 5 hergestellten Haftklebemassen wurde der Gelwert nach der Elektronenetrahlvernetzung mit Test D ermittelt. Die gemessenen Werte sind in Tabelle 1 aufgelistet.

Tabelle 1: Gelwerte nach Test D.

| Beispiel | Gelwert in % (Test D) |
|---|---|
| 1 | 62 |
| 2 | 61 |
| 3 | 63 |
| 4 | 35 |
| 5 | 76 |

Erwartungsgemäß weist die Probe nach Beispiel 5, die mit der höchsten Dosis bestrahlt wurde, den höchsten Vernetzungsgrad und die mit der niedrigsten Dosis bestrahlte Probe 4 den geringsten Vernetzungsgrad auf.

Zur Ermittlung der elektrischen Erwärmbarkeit wurden die erfindungsgemäßen Flächengebilde dem Test B unterzogen, wobei die Endtemperaturen nach Anlegen einer definierten Spannung gemessen wurde. Die Ergebnisse sind in Tabelle 2 dargestellt.

Tabelle 2: Elektrisch induzierte Temperaturen nach Test B.

| Beispiel | Temperatur in °C (Test B) |
|---|---|
| 1 | 46 |
| 2 | 56 |
| 3 | 55 |
| 4 | 50 |
| 5 | 61 |

Alle Beispiele weisen ein ausgeprägtes elektrisch induziertes Aufheizverhalten auf. Ein Vergleich der Beispiele 1 und 2 belegt, dass mit Erhöhung des Füllgrades, das heißt des Massenanteils des Leitrußes in den Proben, eine ausgeprägtere Erwärmung erzielt werden kann. Beispiel 3 belegt, dass auch Haftklebemassen mit unterschiedlichen Zusammensetzungen hinsichtlich der einzelnen Monomerenanteile eingesetzt werden können. Die Proben der Beispiele 4 und 5, die sich durch die Bestrahlungsdosen und damit die Vernetzungsgrade unterscheiden, zeigen ein unterschiedliches Erwärmungsverhalten. Insbesondere wird ersichtlich, dass ein hoher Vernetzungsgrad (Beispiel 5) besonders vorteilhafte Erwärmbarkeiten bewirkt.

In Verbindung mit Tabelle 1 belegen die für die Beispiele 2, 4 und 5 gemessenen Temperaturwerte die Korrelation zwischen Strahlungsdosis, Vernetzungsgrad und Erwärmbarkeit. Es zeigt sich, dass mit steigender Dosis der Gelwert und somit der Vernetzungsgrad ansteigt und mit steigendem Vernetzungsgrad die Proben auch eine steigende Erwärmungstemperatur aufweisen. Somit lässt sich die elektrische EnNärmbarkeit einerseits mit zunehmendem Füllgrad des elektrisch leitenden Füllmaterials und andererseits auch durch den Vernetzungsgrad steuern.

Um den PTC-Effekt zu belegen, wurden Temperaturen nach Test B über eine längere Zeitdauer als die im Test genennten 30 s aufgezeichnet. Figur 8 zeigt den asymptotisch einer Grenztemperatur von 90 °C zulaufenden Heizverlauf für Beispiel 5 [Figur 8: Temperaturbegrenzung durch PTC-Effekt (Beispiel 5)].

Das erwärmbare Trägermaterial erreicht in diesem Beispiel eine anfängliche Heizleistung von ca. 3 $W/cm^2$, welche sich aus der angelegten Spannung, dem anfänglichen Strom und der Fläche des Beispielmusters berechnet.

Weiterhin wurde der PTC-Effekt durch eine stromlose Messung des elektrischen Widerstands während der Erwärmung einer Probenanordnung gemessen (Test E). Figur 9 zeigt den Anstieg des Widerstands mit steigender Temperatur [Figur 9: Temperatur-Widerstand-Kurve Spiegelheizung, Widerstandsmessung stromlos mittels Ohm-Meter]

Um zu belegen, dass die nach den oben genannten Beispielen 1 bis 5 hergestellten Haftklebemassen auch gute haftklebende Eigenschaften aufweisen, wurden von allen Proben die Sofortklebkraft auf Stahl ermittelt (s. Test C). Die Messwerte sind in Tabelle 3 zusammengefasst.

Tabelle 3: Sofortklebkräfte auf Stahl nach Test C.

| Beispiel | Klebkraft auf Stahl (Test C) in [N/cm] |
|---|---|
| 1 | 3,6 |
| 2 | 3,4 |
| 3 | 3,2 |
| 4 | 4,2 |
| 5 | 2,8 |

Die in Tabelle 3 aufgezeigten Werte verdeutlichen, dass die Beispiele 1 bis 5 gute haftklebrige Eigenschaften aufweisen. Durch die Mengen des Füllmaterialzusatzes, durch die Monomer/Comonomer-Zusammensetzung sowie durch den Vernetzungsgrad lässt sich die Klebkraft steuern. Durch hohe Anteile des Füllmaterials sinkt die Klebkraft ab.

**Bezugszeichen**

10 Haftklebemasse
12 Metallfolie
14 Metallnetz
16 Kunststofffolie
18 Metallschicht
20 Elektrodenstruktur
22 weitere Haftklebemasse
24 trennbeschichtetes Trägermaterial

**Patentansprüche**

**1.** Flächengebilde aufweisend zumindest eine Schicht einer Haftklebemasse, wobei innerhalb der zumindest einen Schicht der Haftklebemasse Wärme erzeugt werden kann, **dadurch gekennzeichnet, dass**
die Erzeugung der Wärme durch

• elektrischen Stromfluss,
• durch Induktion, und/oder
• durch zumindest einen exothermen chemischen Prozess

hervorgerufen wird.

**2.** Flächengebilde nach Anspruch 1, **dadurch gekennzeichnet, dass**
die zumindest eine Schicht der Haftklebemasse

(a) mindestens eine Klebstoffkomponente und
(b) mindestens ein elektrisch leitfähiges Füllmaterial

umfasst.

**3.** Flächengebilde nach Anspruch 2, **dadurch gekennzeichnet, dass** das elektrisch leitfähige Material Graphit und/oder Ruß ist.

**4.** Flächengebilde nach Anspruch 3, **dadurch gekennzeichnet, dass** das elektrisch leitfähige Material Leitruß ist.

**5.** Flächengebilde nach zumindest einem der Ansprüche 3 oder 4, **dadurch gekennzeichnet, dass**
das mindestens eine elektrisch leitfähige Füllmaterial einen Masseanteil von 2 bis 20 Gew.-% bezogen auf die Haftklebemasse, aufweist.

**6.** Flächengebilde nach zumindest einem der vorangehenden Ansprüche, **dadurch gekennzeichnet, dass**
die zumindest eine Schicht der Haftklebemasse

(a) mindestens eine Klebstoffkomponente und
(b) mindestens ein ferromagnetisches, ferrimagnetisches, superparamagnetisches oder piezoelektrisches Füllmaterial

umfasst.

**7.** Flächengebilde nach Anspruch 6, **dadurch gekennzeichnet, dass** das mindestens eine Füllmaterial ausgewählt ist aus der Gruppe Quarz, Turmalin, Bariumtitanat, Lithiumsulfat. Katiumtartrat. Natriumtartrat, Kallum-Natrium- Tartrat, Ethylendiamintartrat, Ferroelektrika mit Perowskitstruktur und Btei-Zirkonium-Titanat und/oder aus der Gruppe der Metalle Aluminium, Cobalt, Eisen, Nickel oder deren Legierungen sowie der Gruppe der Metalloxide vom Typ n-Maghemit ($\gamma$-$Fe_2O_3$), n-Magnetit ($Fe_3O_4$) und/oder der Ferrite von der allgemeinen Formel $MeFe_2O_4$, wobei Me für zweiwertige Metalle aus der Gruppe Mangan, Kupfer, Zink, Cobalt, Nickel, Magnesium, Calcium oder Cadmium steht.

**8.** Flächengebilde nach zumindest einem der Ansprüche 6 oder 7, **dadurch gekennzeichnet, dass**
das zumindest eine ferromagnetische, ferrimagnetische, superparamagnetische oder piezoelektrische Füllmaterial einen Masseanteil von 1 bis 30 Gew.-% aufweist.

**9.** Flächengebilde nach zumindest einem der Ansprüche 3 bis 8, **dadurch gekennzeichnet, dass**
das Füllmaterial in mindestens einer Raumrichtung eine Ausdehnung von nicht mehr als 500 nm aufweist.

**10.** Flächengebilde nach zumindest einem der vorangehenden Ansprüche, **dadurch gekennzeichnet, dass**
die Klebstoffkomponente eine solche auf Basis von Acrylsäure und/oder Methacrylsäure und/oder auf Basis von Estern der vorgenannten Verbindungen oder eine solche auf Basis von Natur- oder Synthesekautschuk ist.

**11.** Flächengebilde nach zumindest einem der vorangehenden Ansprüche, **dadurch gekennzeichnet, dass**
die Klebstoffkomponente eine solche auf Basis teilkristalliner Polymere ist oder der Klebstoffkomponente teilkristalline Polymere zugesetzt sind.

**12.** Flächengebilde nach zumindest einem der' vorangehenden Ansprüche, **gekennzeichnet durch** zumindest eine elektrisch leitende Kontaktierung.

**13.** Flächengebilde nach zumindest einem der vorangehenden Ansprüche, **gekennzeichnet durch** zumindest eine Einrichtung zur Erzeugung eines elektrischen oder magnetischen Feldes.

**14.** Flächengebilde nach zumindest einem der vorangehenden Ansprüche, **gekennzeichnet durch** zumindest eine Schicht eines Materials, welches zumindest eine chemische Substanz enthält, die in der Lage ist, Wärme **durch** eine exotherme Reaktion zu erzeugen.

**15.** Flächengebilde nach zumindest einem der vorangehenden Ansprüche, **dadurch gekennzeichnet, dass**
die Wärmeerzeugung durch den PTC-Effekt oder das Erreichen der Curietemperatur begrenzbar ist.

**16.** Flächengebilde nach zumindest einem der vorangehenden Ansprüche, **gekennzeichnet durch** zumindest eine Trägerfolie.

**17.** Flächengebilde nach Anspruch 16, **dadurch gekennzeichnet, dass** die Trägerfolie ein Trennpapier oder eine von der Haftklebemasse abziehbare Kunststoffolie ist.

**18.** Flächengebilde nach zumindest einem der vorangehenden Ansprüche, **gekennzeichnet durch** zumindest eine zweite Schicht einer Haftklebemasse.

**19.** Flächengebilde nach zumindest einem der vorangehenden Ansprüche, **dadurch gekennzeichnet, dass**
das erwärmbare Flächengebilde mit einem Mechanismus ausgestattet, der bei erstmaliger Erwärmung des Flächengebildes zu einer Kohäsionserhöhung der haftklebrigen erwärmbaren Schicht und/oder einer weiteren Haftkleberschicht führt.

**20.** Verwendung eines Flächengebildes nach zumindest einem der vorangehenden Ansprüche zur Beheizung von mit derartigen Flächengebilden verklebten Substraten.

**21.** Verwendung nach Anspruch 20, **dadurch gekennzeichnet, dass**
die Beheizung des Substrates durch Erwärmung des Flächengebildes hervorgerufen wird, wobei das Flächengebilde auf einen Untergrund appliziert ist, der mit mindestens einem elektrischen Kontakt oder mindestens einer Einrichtung zur Erzeugung eines elektrischen oder magnetischen Feldes oder mindestens einer chemischen Substanz, welche in der Lage ist, eine exotherme Reaktion innerhalb des Flächengebildes zu initiieren, ausgerüstet ist.

## Claims

**1.** Planar structure comprising at least one layer of a pressure-sensitive adhesive, it being possible within the at least one layer of the pressure-sensitive adhesive for heat to be generated, **characterized in that** the generation of heat is induced by

- electrical current flow,
- by induction, and/or
- by at least one exothermic chemical process.

**2.** Planar structure of Claim 1, **characterized in that** the at least one layer of the pressure-sensitive adhesive comprises

(c) at least one adhesive component and
(d) at least one electrically conductive filler material.

**3.** Planar structure of Claim 2, **characterized in that** the electrically conductive material is graphite and/or carbon black.

**4.** Planar structure of Claim 3, **characterized in that** the electrically conductive material is conductive carbon black.

**5.** Planar structure of at least one of Claims 3 or 4, **characterized in that** the at least one electrically conductive filler material has a mass fraction of 2% to 20% by weight, based on the pressure-sensitive adhesive.

**6.** Planar structure of at least one of the preceding claims, **characterized in that** the at least one layer of the pressure-sensitive adhesive comprises

(c) at least one adhesive component and
(d) at least one ferromagnetic, ferrimagnetic, superparamagnetic or piezoelectric filler material.

**7.** Planar structure of Claim 6, **characterized in that** the at least one filler material is selected from the group consisting of quartz, tourmaline, barium titanate, lithium sulfate, potassium tartrate, sodium tartrate, potassium sodium tartrate, ethylenediamine tartrate, ferroelectrics with perovskite structure and lead zirconium titanate and/or from the group consisting of the metals aluminum, cobalt, iron, and nickel or their alloys and also from the group consisting of the metal oxides of the type n-maghemite ($\gamma$-$Fe_2O_3$), n-magnetite ($Fe_3O_4$) and/or the ferrites of

the general formula $MeFe_2O_4$ where Me stands for divalent metals from the group manganese, copper, zinc, cobalt, nickel, magnesium, calcium or cadmium.

**8.** Planar structure of at least one of Claims 6 or 7, **characterized in that** the at least one ferromagnetic, ferrimagnetic, superparamagnetic or piezoelectric filler material has a mass fraction of 1 % to 30% by weight.

**9.** Planar structure of at least one of Claims 3 to 8, **characterized in that** the filler material in at least one spatial direction has an extent of not more than 500 nm.

**10.** Planar structure of at least one of the preceding claims, **characterized in that** the adhesive component is based on acrylic acid and/or methacrylic acid and/or based on esters of the aforementioned compounds or is based on natural rubber or synthetic rubber.

**11.** Planar structure of at least one of the preceding claims, **characterized in that** the adhesive component is based on partially crystalline polymers, or partially crystalline polymers are added to the adhesive component.

**12.** Planar structure of at least one of the preceding claims, **characterized by** at least one electrically conducting contacting means.

**13.** Planar structure of at least one of the preceding claims, **characterized by** at least one means of generating an electrical or magnetic field.

**14.** Planar structure of at least one of the preceding claims, **characterized by** at least one layer of material which comprises at least one chemical substance which is capable of generating heat by means of an exothermic reaction.

**15.** Planar structure of at least one of the preceding claims, **characterized in that** the generation of heat can be limited by the positive temperature coefficient (PTC) effect or attainment of the Curie temperature.

**16.** Planar structure of at least one of the preceding claims, **characterized by** at least one support sheet.

**17.** Planar structure of Claim 16, **characterized in that** the support sheet is a release paper or polymeric film which can be peeled from the pressure-sensitive adhesive.

**18.** Planar structure of at least one of the preceding claims, **characterized by** at least one second layer of a pressure-sensitive adhesive.

**19.** Planar structure of at least one of the preceding claims, **characterized in that** the heatable planar structure is equipped with a mechanism which when the planar structure is first heated leads to an increase in the cohesion of the pressure-sensitive adhesive, heatable layer and/or of a further pressure-sensitive adhesive layer.

**20.** Use of a planar structure of at least one of the preceding claims for heating substrates bonded to such planar structures.

**21.** Use of Claim 20, **characterized in that** the heating of the substrate is induced by heating of the planar structure, the planar structure having been applied to a substrate which is equipped with at least one electrical contact or at least one means of generating an electrical or magnetic field or with at least one chemical substance which is capable of initiating an exothermic reaction within the planar structure.

## Revendications

**1.** Produit plat qui présente au moins une couche de pâte adhésive, de la chaleur pouvant être créée à l'intérieur de la ou des couches de pâte adhésive, **caractérisé en ce que**
la création de chaleur peut être provoquée par

- l'écoulement d'un courant électrique,
- induction et/ou
- au moins un processus chimique exothermique.

**2.** Produit plat selon la revendication 1, **caractérisé en ce que** la ou les couches de pâte adhésive comprennent

(c) au moins un composant adhésif et
(d) au moins un matériau de charge électriquement conducteur.

**3.** Produit plat selon la revendication 2, **caractérisé en ce que** le matériau électriquement conducteur est le graphite et/ou le noir de carbone.

**4.** Produit plat selon la revendication 3, **caractérisé en ce que** le matériau électriquement conducteur est un noir de carbone conducteur.

**5.** Produit plat selon au moins l'une des revendications 3 ou 4, **caractérisé en ce que** le ou les matériaux de charge électriquement conducteurs constituent une proportion pondérale de 2 à 20 % en poids par rapport à la pâte adhésive.

**6.** Produit plat selon au moins l'une des revendications précédentes, **caractérisé en ce que** la ou les couches de pâte adhésive contiennent

(c) au moins un composant adhésif et
(d) au moins un matériau de charge ferromagnétique, ferrimagnétique, supraparamagnétique ou piézo-électrique.

**7.** Produit plat selon la revendication 6, **caractérisé en ce que** le ou les matériaux de charge sont sélectionnés dans l'ensemble constitué du quartz, de la tourmaline, du titanate de baryum, du sulfate de lithium, du tartrate de potassium, du tartrate de sodium, du tartrate de potassium et de sodium, du tartrate d'éthylène diamine, des ferroélectriques à structure de perovskite et du titanate de plomb et de zirconium et/ou dans l'ensemble constitué des métaux aluminium, cobalt, fer, nickel ou leurs alliages ainsi que dans l'ensemble constitué des oxydes métalliques du type n-maghémite ($\gamma$-$Fe_2O_3$), de la n-magnétite ($Fe_3O_4$) et/ou des ferrites de formule générale $MeFe_2O_4$, Me représentant un métal bivalent sélectionné dans l'ensemble constitué du manganèse, du cuivre, du zinc, du cobalt, du nickel, du magnésium, du calcium et du cadmium.

**8.** Produit plat selon au moins l'une des revendications 6 ou 7, **caractérisé en ce que** le ou les matériaux de charge ferromagnétiques, ferrimagnétiques, supraparamagnétiques ou piézoélectriques en constituent une proportion pondérale de 1 à 30 % en poids.

**9.** Produit plat selon au moins l'une des revendications 3 à 8, **caractérisé en ce que** le matériau de charge présente dans une direction de l'espace une dimension qui ne dépasse pas 500 nm.

**10.** Produit plat selon au moins l'une des revendications précédentes, **caractérisé en ce que** le composant adhésif est un composant adhésif à base d'acide acrylique et/ou d'acide méthacrylique et/ou à base d'esters des composés susmentionnés ou un composant adhésif à base de caoutchouc naturel ou synthétique.

**11.** Produit plat selon au moins l'une des revendications précédentes, **caractérisé en ce que** le composant adhésif est un composant adhésif à base de polymères partiellement cristallins, ou **en ce que** des polymères partiellement cristallins sont ajoutés au composant adhésif.

**12.** Produit plat selon au moins l'une des revendications précédentes, **caractérisé par** la présence d'au moins un contact électriquement conducteur.

**13.** Produit plat selon au moins l'une des revendications précédentes, **caractérisé par** au moins un dispositif qui crée un champ électrique ou magnétique.

**14.** Produit plat selon au moins l'une des revendications précédentes, **caractérisé par** la présence d'au moins une couche d'un matériau qui contient au moins une substance chimique en mesure de dégager de la chaleur par une réaction exothermique.

**15.** Produit plat selon au moins l'une des revendications précédentes, **caractérisé en ce que** la production de chaleur peut être limitée par l'effet CTP (coefficient de température positif) ou l'atteinte de la température de Curie.

**16.** Produit plat selon au moins l'une des revendications précédentes, **caractérisé par** la présence d'au moins une feuille de support.

**17.** Produit plat selon la revendication 16, **caractérisé en ce que** la feuille de support est un papier antiadhésif ou une feuille de matière synthétique qui peut être détachée de la pâte adhésive.

**18.** Produit plat selon au moins l'une des revendications précédentes, **caractérisé par** la présence d'au moins une deuxième couche de pâte adhésive.

**19.** Produit plat selon au moins l'une des revendications précédentes, **caractérisé en ce que** le produit plat apte à être chauffé est doté d'un mécanisme qui, lors du premier échauffement du produit plat, entraîne une augmentation de la cohésion de la couche adhésive chauffable et/ou d'une autre couche adhésive.

**20.** Utilisation d'un produit plat selon au moins l'une des revendications précédentes pour chauffer des supports sur lesquels ces produits plats sont collés.

**21.** Utilisation selon la revendication 20, **caractérisée en ce que** le chauffage du support est provoqué par l'échauffement du produit plat, le produit plat étant appliqué sur une base sous-jacente dotée d'au moins un contact électrique, d'au moins un dispositif de création d'un champ électrique ou magnétique ou d'au moins une substance chimique en mesure d'amorcer une réaction exothermique à l'intérieur du produit plat.

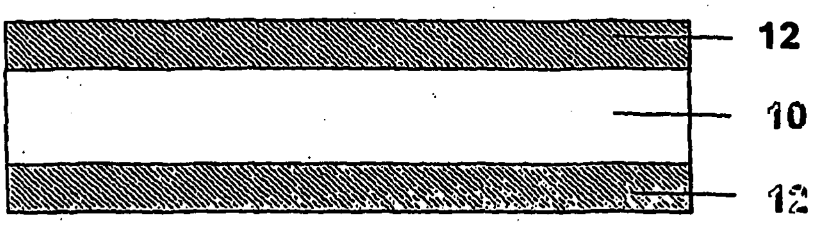


Fig. 1

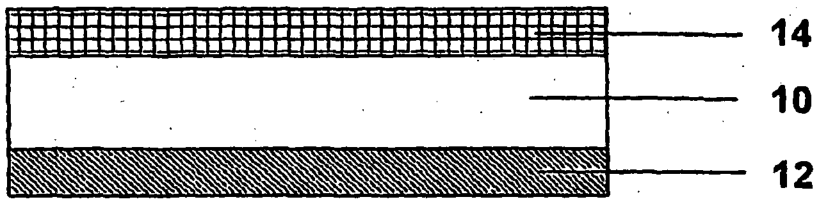


Fig. 2

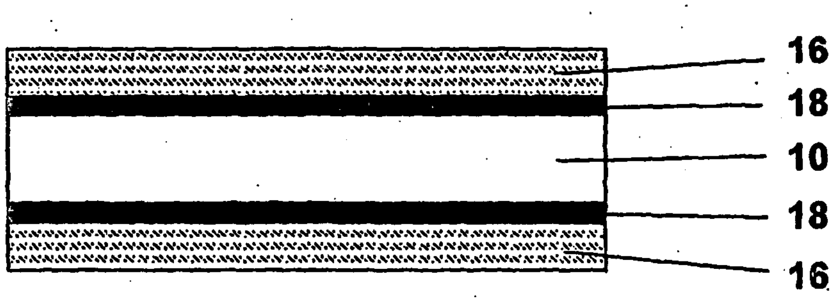


Fig. 3

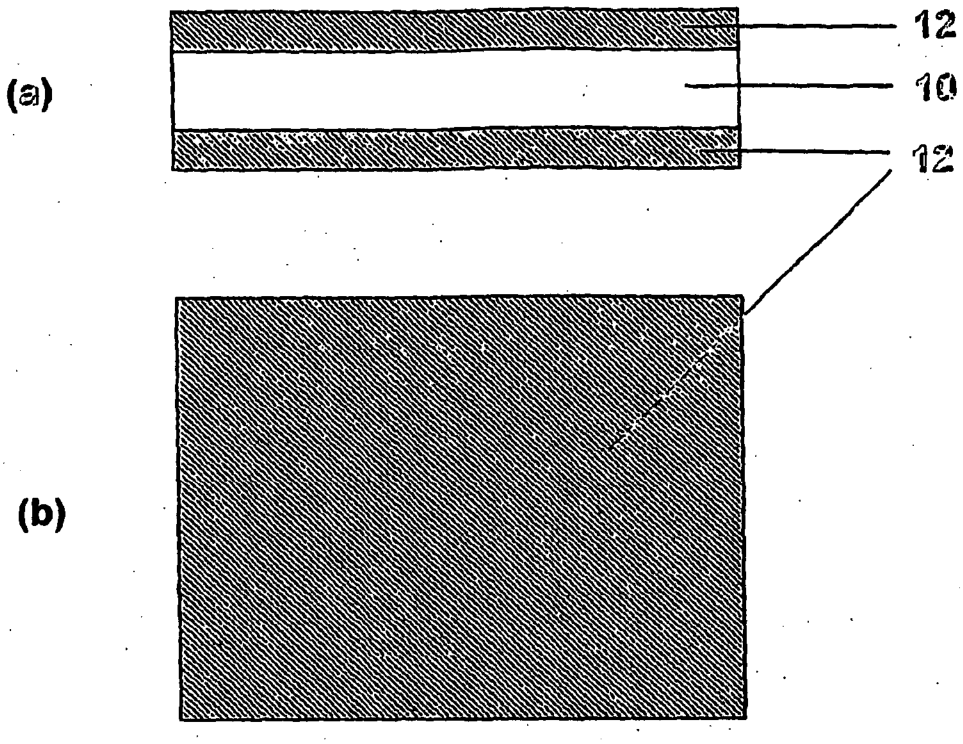


Fig. 4

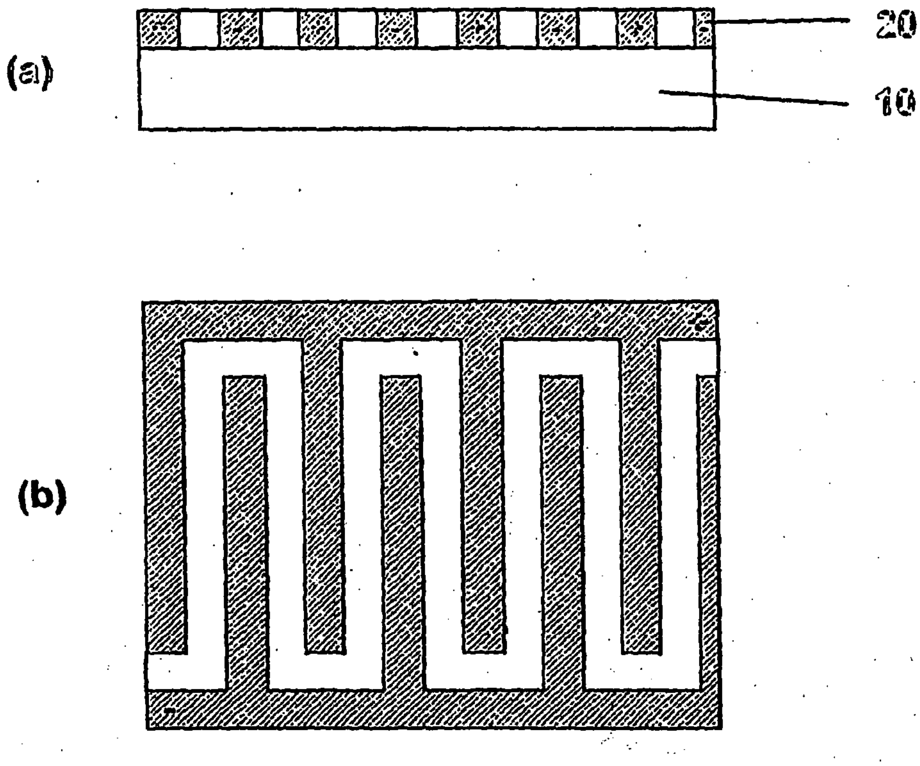


Fig. 5

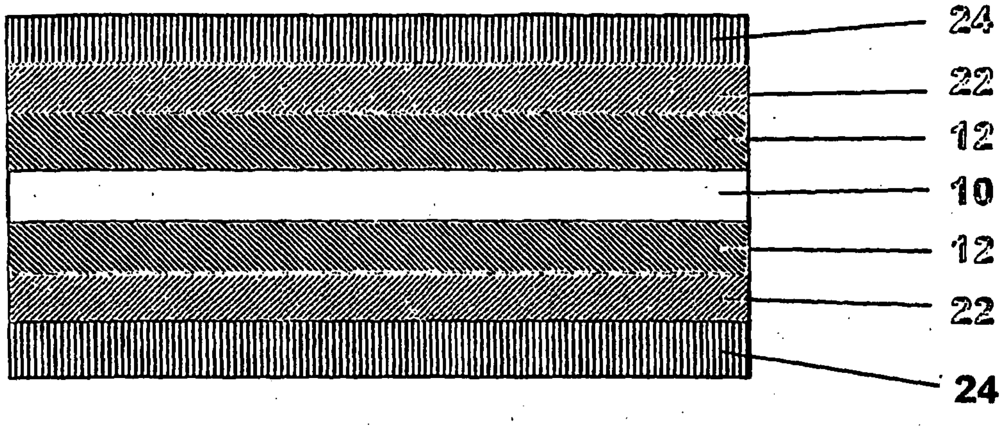


Fig. 6

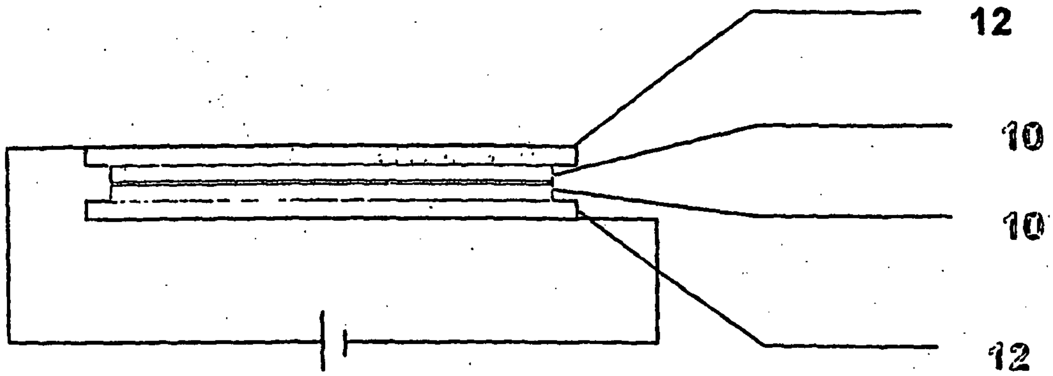
12
10
10
12

Fig. 7

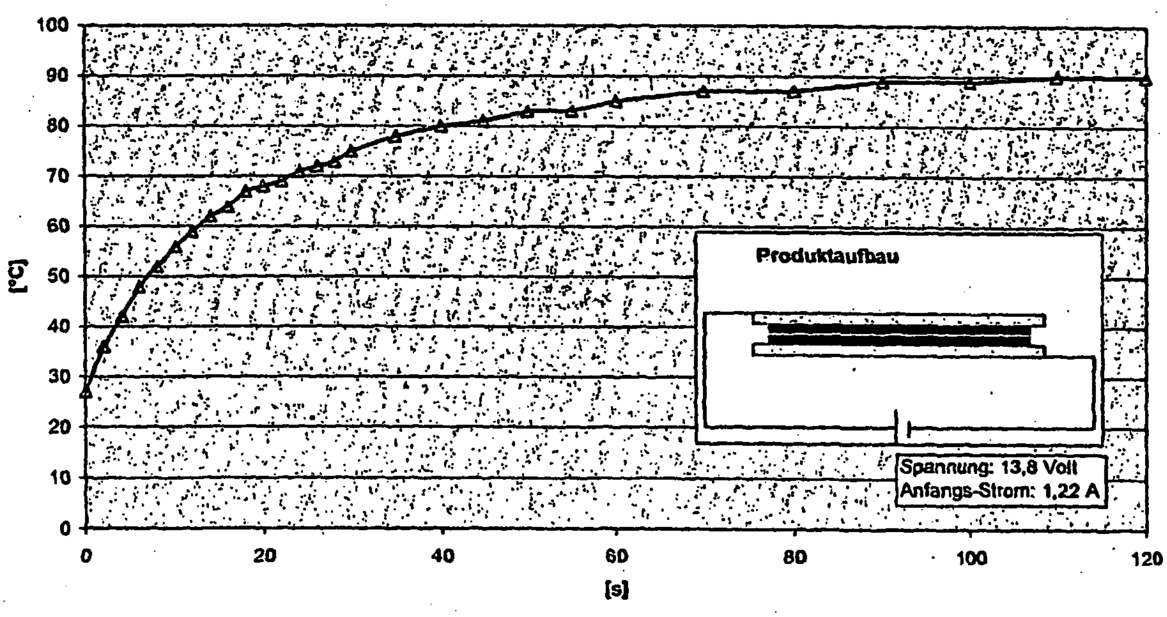
100
90
80
70
60
50
40
30
20
10
0
[°C]
0
20
40
60
80
100
120
[s]
Produktaufbau
Spannung: 13,8 Volt
Anfangs-Strom: 1,22 A

Fig. 8

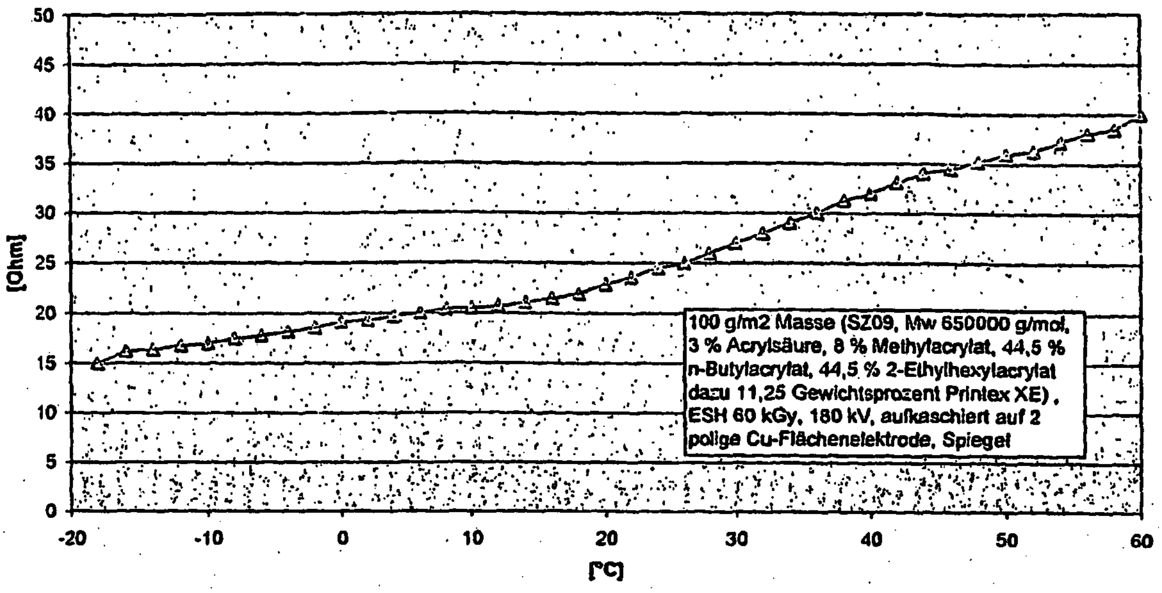
50
45
40
35
30
25
20
15
10
5
0
[Ohm]
-20
-10
0
10
20
30
40
50
60
[°C]
100 g/m2 Masse (SZ09, Mw 650000 g/mol, 3 % Acrylsäure, 8 % Methylacrylat, 44,5 % n-Butylacrylat, 44,5 % 2-Ethylhexylacrylat dazu 11,25 Gewichtsprozent Printex XE), ESH 60 kGy, 180 kV, aufkaschiert auf 2 polige Cu-Flächenelektrode, Spiegel

**Fig. 9**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 2948350 A1
- EP 0307205 A1
- EP 0512703 A1
- EP 0852801 A1
- EP 0435923 A1
- EP 942059 A
- EP 942060 A
- WO 0212409 A1
- EP 0311142 A1
- US 4775778 A


### In der Beschreibung aufgeführte Nicht-Patentliteratur


- **DONATAS SATAS.** Handbook of Pressure Sensitive Adhesive Technology. van Nostrand, 1989
- **T.G. FOX.** *Bull. Am. Phys. Soc.,* 1956, vol. 1, 123
- Electron Beam Processing. **SKELHORNE.** Chemistry and Technology of UV and EB formulation for Coatings, Inks and Paints. 1991, vol. 1
- **HOUBEN WEYL.** *Methoden der Organischen Chemie,* vol. E 19a, 60-147